# EUROPEAN PATENT SPECIFICATION

(11) **EP 2 199 883 B1**
(45) Date of publication and mention of the grant of the patent: **02.01.2013**
(21) Application number: 09177471.1
(22) Date of filing: 30.11.2009
(51) Int. Cl.: G05B 19/418, A24C 5/34

(54) **A method of setting up and managing the inspection device in a machine for manufacturing tobacco products**
Verfahren zur Einrichtung und Verwaltung einer Prüfvorrichtung in einer Maschine zur Herstellung von Tabakprodukten
Procédé d'installation et de gestion d'un dispositif d'inspection dans une machine pour la fabrication de produits de tabac

(30) Priority: 18.12.2008 IT BO20080755
(43) Date of publication of application: 23.06.2010
(73) Proprietor: G.D S.p.A., 40133 Bologna (IT)
(72) Inventor: Osti, Eugenio, 40069 Zola Predosa (BO) (IT); Cuppini, Michele, 40011 Anzola Emilia (IT)
(74) Representative: Bianciardi, Ezio

(56) References cited:
- EP-A- 1 704 786
- IT-B- 1 234 506
- US-A- 5 353 356

## Description

The present invention relates to a method of setting up and managing the inspection device in a machine for manufacturing tobacco products.

Machines for manufacturing and/or processing tobacco products can be divided into two categories.

A first category comprises so-called "continuous rod" machines, that is to say cigarette makers and filter makers in which a continuous cigarette rod or filter rod advancing lengthwise along a channel, in the direction of its longitudinal axis, is divided into discrete sticks of predetermined length.

A second category comprises machines for handling and processing tobacco products in the form of a cylindrical stick; these include filter tip attachment machines, composite filter makers, and machines for processing plain (filterless) cigarettes, in which the discrete tobacco products are conveyed along a feed direction transverse to their longitudinal axes by means of rollers, and may undergo a variety of processing steps while being transported in this manner.

The following specification refers in particular to a machine for manufacturing filter cigarettes, and more exactly a filter tip attachment machine, albeit the description would be applicable substantially to any one of the machines mentioned above.

Conventionally, filter tip attachment machines comprise a plurality of rollers ordered in a train, substantially tangential one to the next and provided with aspirating flutes around the periphery such as will accommodate cigarettes and filter sticks, received respectively from a cigarette maker and from a hopper forming part of the selfsame filter tip attachment machine.

The machine carries out a series of operations on the sticks occupying these flutes, namely: successive pairs of cigarettes are matched each to the two ends of a common filter stick the length of two filter tips, the two cigarettes are joined to the filter by means of a gummed tipping paper, the resulting double length cigarettes are cut in half to create a succession of single filter cigarettes, which are subsequently microperforated by a laser device.

Lastly, during the course of their passage around one or more of the final rollers in the train, the filter cigarettes are inspected by a quality control unit in order to detect and identify possible defects (tears, holes, stains, distortions, deviations from correct colour and from prescribed geometrical dimensions, etc.), and determine the rejection of any cigarettes considered to be substandard and therefore not acceptable.

The inspection unit comprises optical means consisting of video cameras directed generally at two successive rollers, in such a way as to scan a first half and then a second half of the cylindrical surface presented by the cigarettes.

The cameras utilized are line scan devices, designed to explore the cylindrical outer surface of each cigarette by reading one longitudinal line at a time, until a full image is built up.

More precisely, as each cigarette comes within range of the cameras, these will proceed to scan the cylindrical surface line by line, their operation synchronized with timing pulses emitted by an encoder, until a full image is produced, consisting for example of 88 scanned lines.

The images created in this way are supplied to a central control unit, which will compare them with a reference image of a cigarette presenting the required characteristics of the brand currently in production.

Depending upon the outcome of the comparison between the aforementioned images, the control unit will relay an output signal to a device of which the function is to reject any defective cigarettes, that is to say cigarettes failing, for whatever reason, to meet the limits of a given acceptance threshold when compared to the reference image.

It is also known, from patent US 5,353,356, a method and apparatus, for use with optical product inspection means, which provide a product gauge which aids in the processing of an over-all image of the product being inspected so that a significant defect or deviation from the norm occurring anywhere in the image will cause the associated product to be identified as deviant or defective.

Following the advent of ultra high speed cigarette makers and filter tip attachment machines (capable of turning out more than twenty thousand filter cigarettes per minute), quality control systems of the type outlined above have become unreliable for a number of reasons.

In particular, the cigarettes occupying the single flutes are not securely retained either in the longitudinal direction or in the transverse direction, with the result that the positions they assume relative to the cameras are liable to be wholly random and unpredictable.

Displacements of the cigarettes in the longitudinal direction can be caused by variations in the force of suction generated along the flutes, changes in the properties of the materials making up the cigarettes, and mechanical reactions induced by the transfer of the cigarettes from one roller to another.

As regards transverse displacements of the cigarettes in the respective flutes, on the other hand, these can occur when there are clearances between the cigarettes and the flutes.

Self-evidently, any random shift of the cigarettes within the respective flutes, especially in the transverse direction, will put the cylindrical sticks out of phase with the pulsed signals emitted by the encoder and consequently with the cameras, the result being that the interpretation of the output signals from the cameras will be uncertain, and the signals therefore unreliable for the purposes of determining the characteristics of the cigarettes and eliminating those that may be defective.

These out-of-phase effects can also be caused by delays in activating the optical inspection means, relative to the moment in which the pulsed signals are generated by the encoder.

Clearly, it is not within the capability of the operator to eliminate these drawbacks.

Problems of this type occur in cigarette makers and in filter makers alike.

These machines, conventionally, are designed to fashion continuous cigarette or filter rods, consisting respectively in streams of tobacco and streams of filter material wrapped in continuous strips of paper material.

The continuous rods produced in this way, advancing along rectilinear channels and divided ultimately into discrete lengths by cutter means operating at the outfeed end of the channels, are subjected to inspections by a relative unit in order to detect and identify possible defects (tears, holes, stains, distortions, deviations from correct colour and from prescribed geometrical dimensions, etc.).

Given the notably high operating speeds of modern manufacturing machinery, and consequently the ultra fast rates at which the continuous rods advance, existing inspection systems have become unreliable by reason of the vibrations and torsional stresses to which the advancing rods are typically subjected.

The object of the present invention is to provide a method such as will allow any machine used in the manufacture of tobacco products, even when operating at ultra high speed, to make an inspection of the relative products that will not be affected by uncertainties attributable to random movements of the cigarettes and/or continuous rods in their flutes or channels, and to delays of electronic origin.

A further object of the present invention is to provide a method for setting up the inspection device of a filter tip attachment machine, particularly in readiness for a new brand of cigarettes, or when switching from the production of one brand to the production of another brand.

The stated object is realized, according to the present invention, in a method as recited in the appended claims.

The invention will now be described in detail, by way of example, with the aid of the accompanying drawings, in which:
- figure 1 shows a system for manufacturing filter cigarettes;
- figure 2 shows an enlarged detail of figure 1;
- figure 3 illustrates a filter cigarette, viewed in perspective and shown separated into its various component parts;
- figures 3a to 3e illustrate typical examples of filter cigarettes;
- figure 3f shows an example of a composite filter;
- figure 4 is a block diagram representing an inspection device utilized in the system of figure 1;
- figure 5 shows the inspection device of figure 4 in an operating situation;
- figure 6 illustrates a continuous rod type cigarette maker or filter maker;
- figure 7 shows an enlarged detail of figure 6.

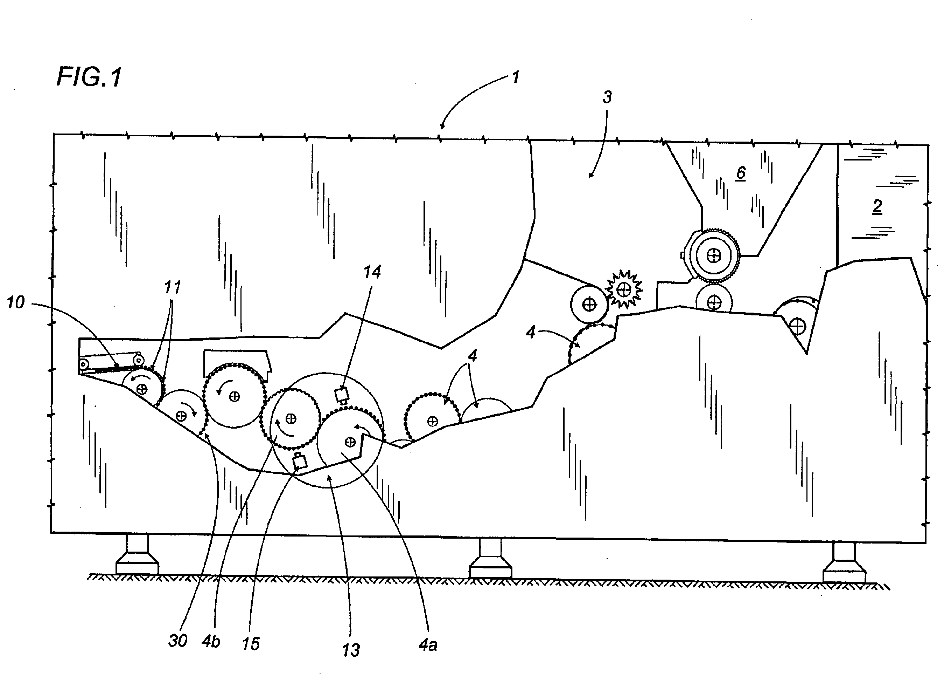

With reference to figure 1, numeral 1 denotes a manufacturing system, in its entirety, for the production of filter cigarettes, comprising a cigarette maker denoted 2 and, connected to the outfeed of this same machine, a filter tip attachment machine denoted 3.

The filter tip attachment machine 3 is conventional in design, consisting in a plurality of aspirating rollers 4 turning on horizontal and parallel axes.

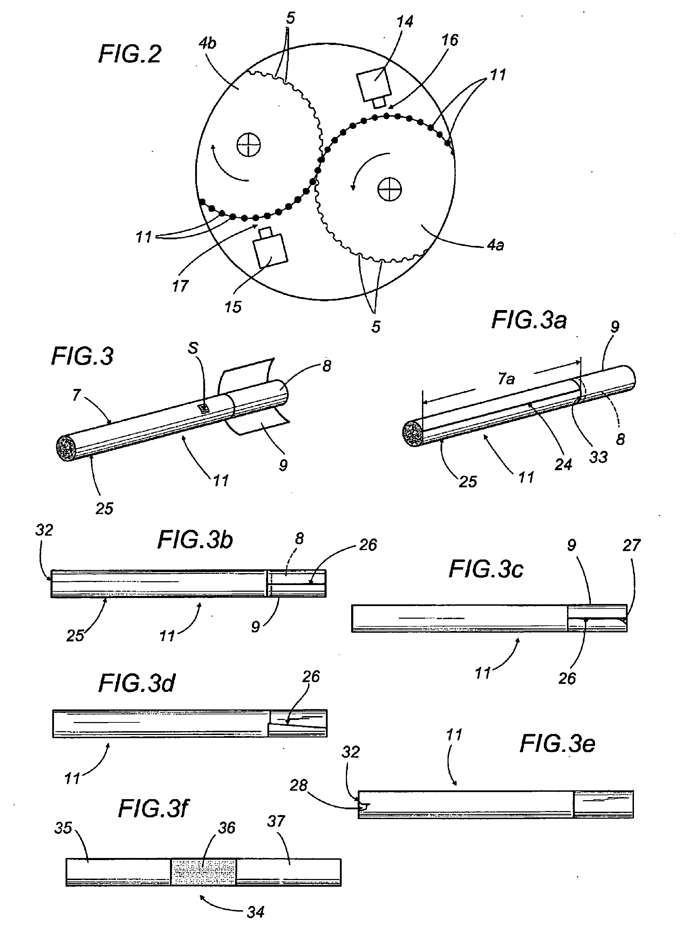

With reference also to figure 2, the rollers 4 are ordered in sequence, placed substantially tangential one to another, set in rotation continuously and provided with aspirating seats, or flutes 5, each designed to accommodate one cigarette and/or one filter.

Whilst the cigarettes 7 are supplied direct to the system by the cigarette maker 2, the filters 8, in the form of sticks produced by a filter maker (not illustrated), are dispensed from a hopper 6 forming part of the filter tip attachment machine 3.

Referring also to figure 3, successive operations (familiar to a person skilled in the art) are carried out with the tobacco products occupying the flutes 5: these include pairing each cigarette 7 with a filter stick 8 and joining the filters 8 to the cigarettes 7 by means of gummed tipping papers denoted 9, so as to form a succession 10 of cigarettes 11 each furnished with a respective filter tip.

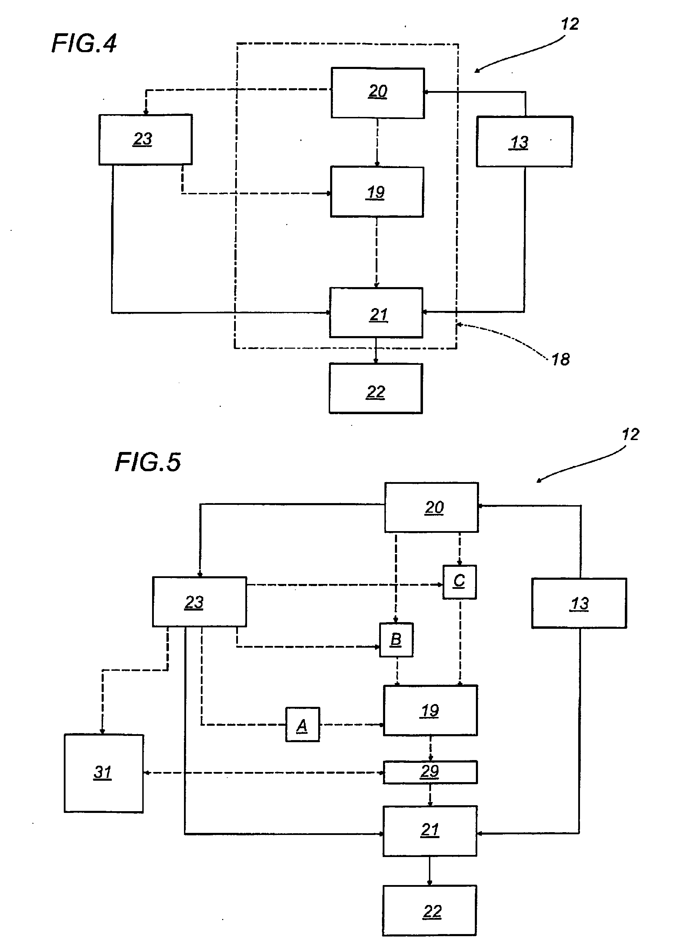

During the course of their progression from one roller 4a to a successive next roller 4b, the filter cigarettes 11 undergo a quality control procedure performed by an inspection device denoted 12 in its entirety (see also figure 4).

The inspection device 12 incorporates an optical unit 13 comprising two video cameras 14 and 15, associated respectively with the one roller 4a and with the other roller 4b and directed toward the respective surfaces of revolution at two positions definable as scanning positions 16 and 17.

Thus, as each filter cigarette 11 passes through the two scanning positions 16 and 17, a first half and then a second half of its cylindrical surface will be inspected, with the result that the cigarette can be scanned substantially around and along its entire outer surface.

The cameras 14 and 15 are line scan type devices able to read the cylindrical surface of the filter cigarettes 11 as a succession of longitudinal lines (eighty eight lines, for example), from which a complete image is built up.

With reference to the block diagram of figure 4, the inspection device 12 comprises an electronic processing module, denoted 18 in its entirety, which in turn comprises a self-learning unit, denoted 19, also a memory unit 20 connected to the output of the optical unit 13, and an analysis and comparison unit denoted 21.

The analysis and comparison unit 21 is connected to the output of the self-learning unit 19, to the output of the optical unit 13 and to the input of an ejector device 22.

Also forming part of the inspection device 12 is an operator interface 23, which could consist in a local or a remote terminal, connected to the memory unit 20 and to the self-learning unit 19 and to the analysis and comparison unit 21.

With reference in particular to the block diagram of figure 5, letters A, B and C denote three blocks indicating a plurality of data or information items supplied via the operator interface 23 to the input of the self-learning unit 19 and used in implementing the method according to the present invention.

More exactly, block A denotes a set of predetermined parameters P1 characteristic of the brand of cigarettes in production.

The parameters P1 in question could relate, for example, to:
- the length of the portion of the cigarette 7, denoted 7a, lying exposed beyond one edge 33 of the tipping paper 9 (figure 3a);
- the length of the tipping paper 9;
- the position, referred to the longitudinal axis, of any lettering S that may be printed on the wrapping paper 25 of the cigarettes 7 (figure 3);
- the colour of the lettering S.

Block B denotes a plurality of images of filter cigarettes 11, originating from the optical unit 13 and retrievable by way of the memory 20 unit, which are selected by the operator through the medium of the interface 23.

These images are used as reference images, relating to cigarettes considered "good" and responding to quality parameters P3 representative of the brand in production. The parameters P3 are known to the operator on the basis of personal experience, or of specific needs associated with the specific type of production.

For example, one of these images (figure 3a) shows a filter cigarette 11 with the gummed overlap or joint line 24 of the wrapping paper 25 exposed to view, whilst in another image (figure 3b) showing a filter cigarette 11, the selfsame joint line 24 is hidden from view.

Notwithstanding the two images are dissimilar in positional terms, it will be clear that both relate to a correctly manufactured filter cigarette 11.

The same applies in the case of the line 26 along which the tipping paper 9 is gummed and joined.

Block C likewise denotes a plurality of reference images stored in the memory 20 unit and selected by the operator through the medium of the interface 23.

These, however, are images of cigarettes not responding to the quality parameters P3 for the brand in production, or cigarettes presenting other types of defects.

For example, one of these images shows a filter cigarette 11 presenting the joint line 26 of the tipping paper 9 blemished at one end 27 by an unwanted dog ear fold (figure 3c), whilst another image shows a filter cigarette 11 of which the tipping paper 9 has been wrapped skew (figure 3d).

Lastly, figure 3 illustrates a filter cigarette 11 of which the wrapping paper 25 presents a tear 28 (figure 3e).

Referring to figure 5, numeral 29 denotes a block interposed between the self-learning unit 19 and the analysis and comparison unit 21, representing a table of parameters P2 relative to the physical properties of the cigarettes, processed by the self-learning unit 19 for the use of the analysis and comparison unit 21.

The ejector device 22 serving to remove defective filter cigarettes 11 is stationed downstream of the two rollers 4a and 4b aforementioned, as viewed in figure 1, and consists in pneumatic means (not shown) operating at an ejection position denoted 30.

The method according to the present invention, by which the inspection device 12 is set up in readiness for the manufacture of a given brand of cigarettes, includes the following steps.

In a first step, the parameters P1 relative to the brand of cigarettes in production (block A) are loaded into the self-learning unit 19 by way of the operator interface 23.

In a second step, the aforementioned plurality of images showing "good" cigarettes (block B) is loaded into the self-learning unit 19 by way of the operator interface 23.

In a third step, the plurality of images showing defective cigarettes (block C) is loaded into the self-learning unit 19 by way of the operator interface 23.

In a fourth step, the data supplied by way of the operator interface 23 during the course of the three previous steps is processed automatically by the self-learning unit 19.

This same fourth step includes a first subsidiary step in which acceptance ranges are established, on a statistical basis, for the following essential items of data:
- the position occupied by one end of the filter cigarette 11 (the end 32 presenting the tobacco filler, for example) in relation to the aspirating flute 5, as measured along the direction of the longitudinal axis;
- the diameter of the filter cigarette 11;
- the grey level of the wrapping paper 25 presented by the exposed portion 7a of the filter cigarette 11;
- the type of tipping paper 9 (for example, white or simulated cork pattern).

In a second subsidiary step of the fourth step, the self-learning unit 19 will also execute a further set of operations, namely:
- select the type of algorithm to use in finding the position 33 at which the edge of the tipping paper 9 is attached to the exposed portion 7a of the filter cigarette 11;
- calculate the grey levels of the filter paper 9;
- calculate the search region in which to locate the aforementioned end 32 of the filter cigarette 11;
- calculate the length of the portion 7a of the cigarette 11 lying exposed beyond the edge 33 of the tipping paper 9;
- calculate the length of the filter paper 9.

Values produced by data processing in the second subsidiary step cannot be changed by the operator.

Finally, in a third subsidiary step of the fourth step, the self-learning unit 19 calculates the values of data items that can be changed by the operator, such as the grey level tolerance threshold, the boundaries of the search region, and the maximum dimensions of areas presenting defects, etc.

The essential data, the data which cannot be changed by the operator and the data that can be changed by the operator constitute the set of parameters P2 relative to the physical properties of the filter cigarettes 11 in production.

With the system in operation, the analysis and comparison unit 21 will execute analysis algorithms on the images coming from the optical unit 13, on the basis of the parameters P2 provided by the self-learning unit 19 and stored in the table 29.

To advantage, the parameters P2 stored in the table 29 can be saved to a central archive 31, organized by brand of cigarette, in such a way as to be retrieved and utilized as and when necessary.

The aforementioned algorithms are stored in the analysis and comparison unit 21 and their use is conditional, in certain instances, on the type of algorithm selected by the self-learning unit 19 during the fourth step.

The operator can re-parameterize values where changes are permitted, by way of the interface 23, according to how production is progressing and on the basis of personal experience. In particular, the operator can adjust the "threshold" values for certain deviations from predetermined set values (for example: length of tipping paper 9, length of exposed portion 7a, size of tears 28).

In accordance with the present invention, finally, it will be seen that the operation of inspecting filter cigarettes 11 in the filter tip attachment machine 3 is not implemented by comparing images, as in prior art methods. In reality, the inspection is effected by comparing the parameters P2 relative to the physical properties of the brand of cigarette in production, calculated by the self-learning unit 19, with the algorithm-based parameters calculated by the analysis and comparison unit 21 on the basis of the images of scanned filter cigarettes 11 received from the optical unit 13.

In the event that the outcome of the comparison should happen to indicate one or more defects, the inspection device 12 will pilot the ejector device 22 to remove the defective filter cigarette 11 at the moment when this same cigarette passes through the ejection position 30.

The method described thus far with reference to a filter tip attachment machine is also applicable, as stated in the preamble, to devices for monitoring the quality of filters, and to devices for monitoring the quality of cigarette sticks or cigarette rods, operating respectively in filter makers and cigarette makers.

In practice, the operator will normally use the interface 23 to select around ten images of "good" filter cigarettes 11, that is to say cigarettes presenting characteristics that are acceptable on the basis of the quality parameters P3 established for the brand in production.

The operator will take only a few minutes to perform the selection of "good" images, which make up the block B needed to establish the parameters P2 stored in the table of block 29.

To obtain a more accurate determination of these parameters P2, it would be possible to carry out the analyses and calculations by means of an off-line self-learning unit, using a remote processor, on the basis of a number of images of "good" filter cigarettes 11 much greater than the number stored in block B.

During a pause in production, for example, the operator could send a hundred or so images of "good" filter cigarettes 11 to the remote processor, together with the data of block A.

The analysis and calculation of the parameters P2 by an off-line self-learning unit would involve a processing time proportionally greater than the time taken by the in-line self-learning unit 19 to process smaller amounts of information.

Having completed the analysis and calculation procedure, the off-line self-learning unit 19 will save the parameters P2 to an off-line table, which the operator can then copy to the table of block 29 as and when convenient.

Figure 3f illustrates a composite filter 34, that is to say a filter made up, for example, of three distinct filter plugs denoted 35, 36 and 37, having different properties.

Such composite filters 34 are manufactured by a composite filter maker, not illustrated, similar in all respects to the filter tip attachment machine 3, and the parameters considered, when performing the first step of the method according to the invention for setting up the inspection device 12, are similar to the parameters P1 listed above.

More particularly, the parameters P1 in question may refer to:
- the length of the single filter plugs 35, 36 and 37 making up the composite filter 34;
- the type of filter plug (for example: cellulose acetate, granules, etc.).

The items of data processed in the fourth step by the self-learning unit 19 in this instance refer to:
- the position, referred to the longitudinal axis of the composite filter 34, of the points of contact between the single filter plugs 35, 36 and 37;
- the diameter of the filter plugs 35, 36 and 37;
- the grey level of the single filter plugs 35, 36 and 37.

In the same way as for the filter tip attachment machine 3, the self-learning unit 19 processes the various data items that cannot be changed by the operator, and those for which changes are allowed.

In the case of a machine (not illustrated) handling plain cigarettes, hence without filters, this will utilize parameters and data deducible from the corresponding parameters P1 and data pertinent to the filter tip attachment machine 3.

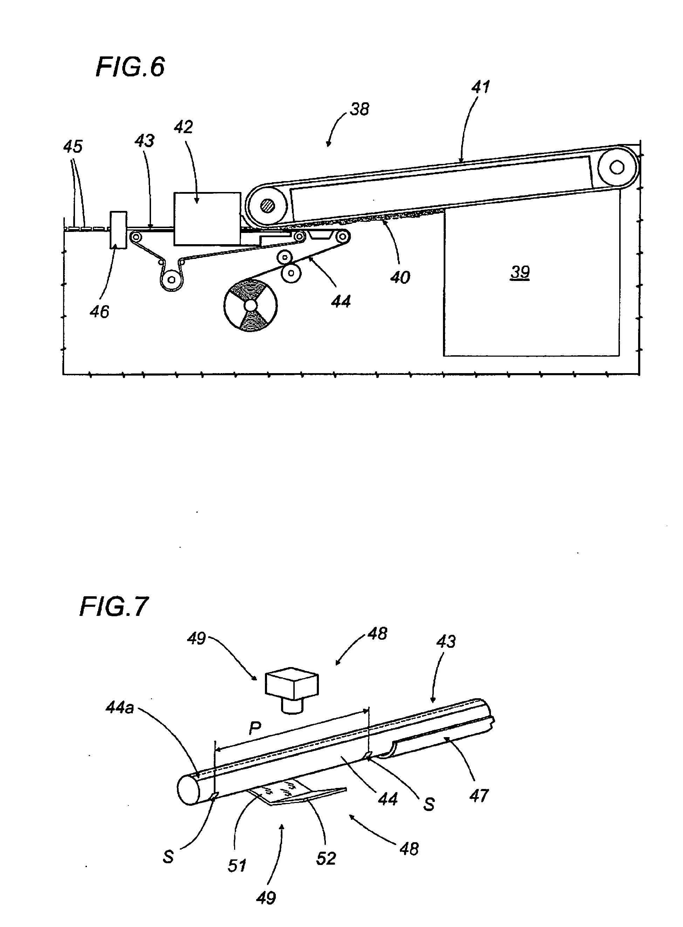

Figure 6 is a schematic illustration of a cigarette maker 38 designed to fashion a continuous cigarette rod, comprising a chimney 39 such as will form a single continuous stream 40 of tobacco particles, in the case of a single track machine (considered here by way of example), or two or more such streams 40 in the case of a twin track or multi track type of machine.

The stream 40 of tobacco particles is transferred by a belt conveyor 41 to a garniture unit 42 such as will turn out a continuous cigarette rod 43 by enveloping the tobacco particles in a continuous strip of paper material, denoted 44, of which the longitudinal edges are overlapped and secured one to another by means of an adhesive, creating an upwardly directed longitudinal joint denoted 44a illustrated to advantage in figure 7.

At the outfeed of the garniture unit 42, the continuous rod 43, printed with lettering S at a pitch denoted P, is divided up into single cigarette sticks 45 by a rotary cutter device 46.

Advancing along a channel 47 downstream of the garniture unit, the continuous cigarette rod 43 is scanned by an inspection device denoted 48 in its entirety.

The inspection device 48 is equipped with an optical unit 49 comprising a colour line scan video camera 50 trained on the cigarette rod 43 from above, and a pair of mirrors 51 and 52, as disclosed in patent EP 937978, for example, positioned on the opposite side of the continuous cigarette rod 43 from the camera 50 and placed at an angle substantially of 120° one relative to the other.

Thus, the optical unit 49, piloted by an encoder (not illustrated) to operate synchronously with the cutter device 46 and with the pitch P of the lettering S, is able to scan the entire cylindrical surface of the continuous cigarette rod 43.

In this instance, the processing step performed by the self-learning unit 19 comprises a first subsidiary step of determining the acceptance range for at least one of the following parameters:
- diameter of the cigarette rod 43;
- grey level of the strip of wrapping paper 44 used for the cigarette rod 43.

The processing step performed by the self-learning unit 19 comprises a second subsidiary step of calculating the grey level of the paper 44 used to fashion the cigarette rod 43.

The method as applied to a continuous rod type cigarette maker proceeds in the same manner as described previously for machines handling tobacco products in the form of discrete cylindrical sticks, with the subsequent steps of processing and memorizing the parameters P2 and, on the basis of the stored parameters P2, using an analysis and comparison unit 21 to process images of the tobacco products acquired during production by an optical unit 13 operating synchronously with the timing pulses emitted by the encoder, and transmitted to the analysis and comparison unit 21.

## Claims

1. A method of setting up and managing the inspection device in a machine for manufacturing tobacco products, said method including the steps of:
- loading a self-learning unit (19) with data relative to predetermined parameters (P1) characteristic of the particular brand of tobacco product in production;
- loading the self-learning unit (19) with data consisting in a plurality of reference images of the tobacco products;
**characterized in that** said method also includes the steps of:
- processing the data loaded into the self-learning unit (19) in order to determine parameters (P2) relative to the physical properties of the tobacco products in production, said parameters being calculated on the basis of the predetermined parameters (P1)characteristic of the particular brand and the significant images of the tobacco products;
- saving and storing the parameters (P2) relative to the physical properties of the tobacco products in production, in a table (29);
- utilizing an analysis and comparison unit (21) to process images of the manufactured tobacco products, said analysis and comparison unit (21) comparing the parameters (P2) relative to the physical properties of the tobacco products in production stored in the table (29) with corresponding parameters that are calculated from the images of the products received during production by the selfsame analysis and comparison unit (21) from an optical unit (13).

2. A method as in claim 1, wherein the images of the manufactured tobacco products are acquired by an optical unit (13) comprising at least one line scan camera (14, 15) and synchronized in operation with timing pulses emitted by an encoder.

3. A method as in claim 2, including a step, performed by an operator utilizing an operator interface (23), of selecting the reference images of the tobacco products.

4. A method as in claim 3, wherein the reference images relate to tobacco products presenting predetermined quality parameters (P3) established for the tobacco products in production.

5. A method as in claim 3, wherein the reference images relate to tobacco products identifiable as defective by comparison with at least one of the predetermined quality parameters (P3).

6. A method as in claim 4 or 5, including a step in which the parameters (P2) relating to the physical properties of the tobacco products in production and populating the table (29), are saved to a central archive (31).

7. A method as in any one of the preceding claims, including a step in which the operator can intervene during operation of the machine, by way of the operator interface (23), to change at least one of the parameters (P2) relating to the physical properties of the tobacco products in production.

8. A method as in any one of claims 1 to 7, wherein the machine is a single track or multi track cigarette maker (2), by which a continuous tobacco rod is fashioned and cut into discrete cigarette sticks (7).

9. A method as in any one of claims 1 to 7, wherein the machine is a single track or multi track filter maker, by which a continuous filter rod is fashioned and cut into discrete filter sticks (8).

10. A method as in any one of claims 1 to 7, wherein the machine is a filter maker of the type designed to manufacture composite filters.

11. A method as in any one of claims 1 to 7, wherein the machine is a machine for processing plain, filterless cigarettes.

12. A method as in any one of claims 1 to 7, wherein the machine is a machine for manufacturing filter cigarettes, or filter tip attachment machine (3).

13. A method as in claims 11 or 12, wherein the processing step executed by the self-learning unit (19) includes a first subsidiary step of determining the acceptance range for at least one of various data items: the position occupied by one end (32) of the filter cigarette (11) in a respective flute (5) of the machine, as referred to the longitudinal axis of the selfsame cigarette; the diameter of the filter cigarette (11); the grey level of the wrapping paper (25) of the filter cigarette (11) ; also of determining the type of tipping paper (9) with which the filter tip is attached to the cigarette.

14. A method as in claim 13, wherein the processing step executed by the self-learning unit (19) includes a second subsidiary step of: selecting the algorithm used in determining the position (33) at which the edge of the tipping paper (9) is attached to the filter cigarette (11); calculating the grey levels of the tipping paper (9); calculating the search region in which to locate the end (32) of the cigarette (7); calculating the length of the portion (7a) of the filter cigarette (11) lying exposed beyond the edge of the tipping paper (9); calculating the length of the filter paper (9).

15. A method as in claim 14, wherein the processing step executed by the self-learning unit (19) includes a third subsidiary step of calculating data items that can be changed by the operator via the operator interface (23), consisting in acceptance values for one or more of the parameters (P2) relating to the physical properties of the tobacco products.

16. A method as in any one of claims 13 to 15, wherein the predetermined parameters (P1) relate to: the length of the portion of the filter cigarette (11) covered by the tipping paper (9); the length of the portion (7a) of the filter cigarette (11) lying exposed beyond the tipping paper (9); the two limit positions of the lettering (S) printed on the portion (7a) of the filter cigarette (11) lying exposed beyond the tipping paper (9).

17. A method as in claims 8 or 9, wherein the processing step executed by the self-learning unit (19) includes a first subsidiary step of determining the acceptance range for, at least: the diameter of the continuous rod (43), or the grey level of the strip of wrapping paper (44) used to fashion the continuous rod (43).

18. A method as in claim 17, wherein the processing step executed by the self-learning unit (19) includes a second subsidiary step of calculating the grey levels of the strip of rapping paper (44) used to fashion the continuous rod (43).

19. A method as in claim 18, wherein the processing step executed by the self-learning unit (19) includes a third subsidiary step of calculating data items that can be changed by the operator via the operator interface (23), consisting in acceptance values for one or more of the parameters (P2) relating to the physical properties of the tobacco products.

20. A method as in any one of claims 17 to 19, wherein the predetermined parameters (P1) relate to: the pitch at which items of lettering (S) are printed one from the next on the continuous rod (43); the colour of the lettering (S).

21. A method as in claim 10, wherein the processing step executed by the self-learning unit (19) includes a first subsidiary step of determining the acceptance range for at least one of various data items: the position, referred to the longitudinal axis of the composite filter (34), of the points of contact between the single filter plugs (35, 36, 37); the diameter of the filter plugs (35, 36, 37); the grey level of the single filter plugs (35, 36, 37).

22. A method as in claim 21, wherein the processing step executed by the self-learning unit (19) includes a second subsidiary step of: calculating the positions at which to locate the two ends of the composite filter (34); calculating the lengths of the single filter plugs (35, 36, 37); calculating the grey level of the single filter plugs (35, 36, 37).

23. A method as in claim 22, wherein the processing step executed by the self-learning unit (19) includes a third subsidiary step of calculating data items that can be changed by the operator via the operator interface (23), consisting in acceptance values for one or more of the parameters (P2) relating to the physical properties of the tobacco products.

24. A method as in claims 21 to 23, wherein the predetermined parameters (P1) relate to: the length of the single filter plugs (35, 36, 37) making up the composite filter (34); the type of filter plug.

## Patentansprüche

1. Verfahren zur Einrichtung und Verwaltung einer Prüfvorrichtung in einer Maschine zur Herstellung von Tabakprodukten, wobei das Verfahren die folgenden Schritte umfasst:
- Einspielen von Daten in eine selbstlernende Einheit (19), die vorausbestimmte Parameter (P1) betreffen, die charakteristisch für die bestimmte Marke eines zu produzierenden Tabakprodukts sind;
- Einspielen von Daten in die selbstlernende Einheit (19), die aus einer Vielzahl von Referenzbildern der Tabakprodukte bestehen;
**dadurch gekennzeichnet, dass** das Verfahren ferner die folgenden Schritte umfasst:
- Verarbeiten der in die selbstlernende Einheit (19) eingespielten Daten, um Parameter (P2) festzulegen, welche die physikalischen Eigenschaften der zu produzierenden Tabakprodukte betreffen, wobei die Parameter auf der Grundlage der vorausbestimmten Parameter (P1) berechnet werden, die für die bestimmte Marke und die kennzeichnenden Bilder der Tabakprodukte charakteristisch sind;
- Speichern und Ablegen der Parameter (P2), welche die physikalischen Eigenschaften der zu produzierenden Tabakprodukte betreffen, in einer Tabelle (29);
- Verwenden einer Analyse- und Vergleichseinheit (21) zum Verarbeiten von Bildern der hergestellten Tabakprodukte, wobei die Analyse- und Vergleichseinheit (21) die in der Tabelle (29) abgelegten Parameter (P2), welche die physikalischen Eigenschaften der zu produzierenden Tabakprodukte betreffen, mit entsprechenden Parametern vergleicht, die von den Bildern der Produkte berechnet wurden, die diese Analyse- und Vergleichseinheit (21) während der Produktion von einer optischen Einheit (13) empfing.

2. Verfahren nach Anspruch 1, wobei die Bilder der hergestellten Tabakprodukte von einer optischen Einheit (13) erfasst werden, die mindestens eine Line-Scan-Kamera (14, 15) umfasst und während des Betriebs mit von einem Kodierer ausgegebenen Taktimpulsen synchronisiert ist.

3. Verfahren nach Anspruch 2, umfassend einen von einem Bediener unter Verwendung einer Bedienerschnittstelle (23) ausgeführten Schritt des Auswählens der Referenzbilder der Tabakprodukte.

4. Verfahren nach Anspruch 3, wobei die Referenzbilder Tabakprodukte betreffen, die vorausbestimmte Qualitätsparameter (P3) aufweisen, die für die zu produzierenden Tabakprodukte bestimmt wurden.

5. Verfahren nach Anspruch 3, wobei die Referenzbilder Tabakprodukte betreffen, die durch Vergleichen mit mindestens einem der vorausbestimmten Qualitätsparameter (P3) als defekt identifizierbar sind.

6. Verfahren nach Anspruch 4 oder 5, umfassend einen Schritt, in dem die Parameter (P2), welche die physikalischen Eigenschaften der zu produzierenden Tabakprodukte betreffen und in die Tabelle (29) eingepflegt werden, in einem zentralen Archiv (31) gespeichert werden.

7. Verfahren nach einem der vorangehenden Ansprüche, umfassend einen Schritt, in dem der Bediener während des Betriebs der Maschine mithilfe der Bedienerschnittstelle (23) eingreifen kann, um mindestens einen der Parameter (P2), welche die physikalischen Eigenschaften der zu produzierenden Tabakprodukte betreffen, zu ändern.

8. Verfahren nach einem der Ansprüche 1 bis 7, wobei die Maschine eine ein- oder mehrlinige Zigarettenmaschine (2) ist, durch die ein kontinuierlicher Tabakstrang gebildet und in einzelne Zigarettenstäbchen (7) geschnitten wird.

9. Verfahren nach einem der Ansprüche 1 bis 7, wobei die Maschine eine ein- oder mehrlinige Filtermaschine ist, durch die ein kontinuierlicher Filterstrang gebildet und in einzelne Filterstäbchen (8) geschnitten wird.

10. Verfahren nach einem der Ansprüche 1 bis 7, wobei die Maschine eine Filtermaschine vom Typ ist, der zur Herstellung von Verbundfiltern konzipiert ist.

11. Verfahren nach einem der Ansprüche 1 bis 7, wobei die Maschine eine Maschine zur Verarbeitung von einfachen, filterlosen Zigaretten ist.

12. Verfahren nach einem der Ansprüche 1 bis 7, wobei die Maschine eine Maschine zur Herstellung von Filterzigaretten oder eine Maschine (3) zum Anbringen von Filtermundstücken ist.

13. Verfahren nach den Ansprüchen 11 oder 12, wobei der von der selbstlernenden Einheit (19) ausgeführte Verarbeitungsschritt einen ersten Unterschritt des Festlegens des Akzeptanzbereiches mindestens eines von verschiedenen Datenelementen umfasst: die von einem Ende (32) der Filterzigarette (11) eingenommene Position in einer entsprechenden Rille (5) der Maschine in Bezug zur Längsachse dieser Zigarette; der Durchmesser der Filterzigarette (11); die Graustufe des Umhüllungspapiers (25) der Filterzigarette (11); und des Festlegens des Typs Mundstückpapier (9), mit dem das Filtermundstück an der Zigarette angebracht wird.

14. Verfahren nach Anspruch 13, wobei der von der selbstlernenden Einheit (19) ausgeführte Verarbeitungsschritt den folgenden zweiten Unterschritt umfasst: Auswahl des Algorithmus, der beim Festlegen der Position (33) verwendet wird, in der der Rand des Mundstückpapiers (9) an der Filterzigarette (11) angebracht wird; Berechnen der Graustufen des Mundstückpapiers (9); Berechnen des Suchbereichs, in dem das Ende (32) der Zigarette (7) lokalisiert wird; Berechnen der Länge des Abschnitts (7a) der Filterzigarette (11), der über den Rand des Mundstückpapiers (9) hinausgeht; Berechnen der Länge des Filterpapiers (9).

15. Verfahren nach Anspruch 14, wobei der von der selbstlernenden Einheit (19) ausgeführte Verarbeitungsschritt einen dritten Unterschritt des Berechnens von Datenelementen, die vom Bediener über die Bedienerschnittstelle (23) geändert werden können, umfasst, die aus Akzeptanzwerten für einen oder mehrere der Parameter (P2) bestehen, welche die physikalischen Eigenschaften der Tabakprodukte betreffen.

16. Verfahren nach einem der Ansprüche 13 bis 15, wobei die vorausbestimmten Parameter (P1) Folgendes betreffen: die Länge des Abschnitts der Filterzigarette (11), der vom Mundstückpapier (9) bedeckt ist; die Länge des Abschnitts (7a) der Filterzigarette (11), der über den Rand des Mundstückpapiers (9) hinausgeht; die zwei Grenzpositionen des Schriftzugs (S), der auf den über das Mundstückpapier (9) hinausgehenden Abschnitt (7a) der Filterzigarette (11) aufgedruckt ist.

17. Verfahren nach den Ansprüchen 8 oder 9, wobei der von der selbstlernenden Einheit (19) ausgeführte Verarbeitungsschritt einen ersten Unterschritt des Festlegens des Akzeptanzbereichs mindestens für Folgendes umfasst: den Durchmesser des kontinuierlichen Strangs (43) oder der Graustufe des Streifens Umhüllungspapier (44), der zur Ausbildung des kontinuierlichen Strangs (43) verwendet wird.

18. Verfahren nach Anspruch 17, wobei der von der selbstlernenden Einheit (19) ausgeführte Verarbeitungsschritt einen zweiten Unterschritt des Berechnens der Graustufen des Streifens Umhüllungspapier (44) umfasst, der zur Ausbildung des kontinuierlichen Strangs (43) verwendet wird.

19. Verfahren nach Anspruch 18, wobei der von der selbstlernenden Einheit (19) ausgeführte Verarbeitungsschritt einen dritten Unterschritt des Berechnens von Datenelementen, die vom Bediener über die Bedienerschnittstelle (23) geändert werden können, umfasst, die aus Akzeptanzwerten für einen oder mehreren der Parameter (P2) bestehen, welche die physikalischen Eigenschaften der Tabakprodukte betreffen.

20. Verfahren nach einem der Ansprüche 17 bis 19, wobei die vorausbestimmten Parameter (P1) Folgendes betreffen: den Abstand, bei dem Teile des Schriftzugs (S) auf den kontinuierlichen Strang (43) aufgedruckt werden; die Farbe des Schriftzugs (S).

21. Verfahren nach Anspruch 10, wobei der von der selbstlernenden Einheit (19) ausgeführte Verarbeitungsschritt einen ersten Unterschritt des Festlegens des Akzeptanzbereiches mindestens eines von verschiedenen Datenelementen umfasst: die Position der Kontaktpunkte zwischen den einzelnen Filterstopfen (35, 36, 37) in Bezug zur Längsachse des Verbundfilters (34); der Durchmesser der Filterstopfen (35, 36, 37); die Graustufe der einzelnen Filterstopfen (35, 36, 37).

22. Verfahren nach Anspruch 21, wobei der von der selbstlernenden Einheit (19) ausgeführte Verarbeitungsschritt einen folgenden zweiten Unterschritt umfasst: Berechnen der Positionen, in denen die zwei Enden des Verbundfilters (34) lokalisiert werden; Berechnen der Längen der einzelnen Filterstopfen (35, 36, 37); Berechnen der Graustufe der einzelnen Filterstopfen (35, 36, 37).

23. Verfahren nach Anspruch 22, wobei der von der selbstlernenden Einheit (19) ausgeführte Verarbeitungsschritt einen dritten Unterschritt des Berechnens von Datenelementen, die vom Bediener über die Bedienerschnittstelle (23) geändert werden können, umfasst, die aus Akzeptanzwerten für einen oder mehreren der Parameter (P2) bestehen, welche die physikalischen Eigenschaften der Tabakprodukte betreffen.

24. Verfahren nach den Ansprüchen 21 bis 23, wobei die vorausbestimmten Parameter (P1) Folgendes betreffen: die Länge der einzelnen Filterstopfen (35, 36, 37), welche den Verbundfilter (34) bilden; der Typ Filterstopfen.

## Revendications

1. Procédé d'installation et de gestion d'un dispositif de contrôle dans une machine pour la fabrication de produits du tabac, ledit procédé incluant les étapes de :
- chargement dans une unité d'auto-apprentissage (19) de données relatives à des paramètres prédéterminés (P1), typiques de la marque particulière du produit du tabac à produire ;
- chargement dans l'unité d'auto-apprentissage (19) de données consistant en une pluralité d'images de référence de produits du tabac ;
**caractérisé en ce que** ledit procédé inclut de plus les étapes de :
- traitement des données chargées dans l'unité d'auto-apprentissage (19) afin de déterminer les paramètres (P2) relatifs aux propriétés physiques des produits du tabac à produire, lesdits paramètre étant calculés sur la base de paramètres prédéterminés (P1), typiques de la marque particulière
et des images significatives des produits du tabac ;
- sauvegarde et stockage, dans un tableau (29), des paramètres (P2) relatifs aux propriétés physiques des produits du tabac à produire ;
- utilisation d'une unité d'analyse et de comparaison (21) pour traiter les images de produits du tabac fabriqués, ladite unité d'analyse et de comparaison (21) comparant les
paramètres (P2) relatifs aux propriétés physiques des produits du tabac à produire stockés dans le tableau (29) avec des paramètres correspondants qui sont calculés à partir des images des produits reçues lors de la production par ladite unité d'analyse et de comparaison (21) par le biais d'une unité optique (13).

2. Procédé selon la revendication 1, dans lequel les images des produits du tabac sont obtenues par une unité optique (13) comprenant au moins une caméra à balayage linéaire (14, 15) et synchronisée en cours de fonctionnement par des impulsions de rythme émises par un encodeur.

3. Procédé selon la revendication 2, incluant une étape, effectuée par un opérateur utilisant une interface opérateur (23), de sélection des images des produits du tabac de référence.

4. Procédé selon la revendication 3, dans lequel lesdites images de référence concernent des produits du tabac présentant des paramètres de qualité prédéterminés (P3) établis pour les produits du tabac à produire.

5. Procédé selon la revendication 3, dans lequel les images de référence concernent des produits du tabac identifiables comme étant défectueux par rapport à au moins l'un des paramètres de qualité prédéterminés (P3).

6. Procédé selon les revendications 4 ou 5, incluant une étape dans laquelle les paramètres (P2) relatifs aux propriétés physiques des produits du tabac à produire et contenus dans le tableau (29), sont sauvegardés dans des archives centralisées (31).

7. Procédé selon l'une quelconque des revendications précédentes, incluant une étape dans laquelle l'opérateur peut intervenir lors du fonctionnement de la machine, par le biais de l'interface opérateur (23), pour modifier au moins l'un des paramètres (P2) relatifs aux propriétés physiques des produits du tabac à produire.

8. Procédé selon l'une quelconque des revendications de 1 à 7, dans lequel la machine est une confectionneuse de cigarettes à piste simple ou à pistes multiples (2), par laquelle un boudin continu de tabac est enroulé et coupé en bâtonnets de cigarettes distincts (7).

9. Procédé selon l'une quelconque des revendications de 1 à 7, dans lequel la machine est une confectionneuse de filtres à piste simple ou à pistes multiples (2), par laquelle un bâtonnet-filtre continu est façonné et coupé en bâtonnets de filtres distincts (7).

10. Procédé selon l'une quelconque des revendications de 1 à 7, dans lequel la machine est une confectionneuse de filtres de type conçu pour fabriquer des filtres composites.

11. Procédé selon l'une quelconque des revendications de 1 à 7, dans lequel la machine est une machine pour traiter des simples cigarettes sans filtre.

12. Procédé selon l'une quelconque des revendications de 1 à 7, dans lequel la machine est une confectionneuse de cigarettes filtres ou une assembleuse de filtres (3).

13. Procédé selon les revendications 11 ou 12, dans lequel l'étape de traitement exécutée par l'unité d'auto-apprentissage (19) inclut une première étape complémentaire de détermination d'une fourchette d'acceptation pour au moins l'un des différents éléments d'information suivants : la position occupée par une extrémité (32) de la cigarette filtre (11) dans une cannelure (5) respective de la machine, par rapport à l'axe longitudinal de ladite cigarette ; le diamètre de la cigarette filtre (11) ; le niveau de gris du papier d'emballage (25) de la cigarette filtre (11) ; mais aussi la détermination du type de papier de manchette (9) avec lequel le bout-filtre est assemblé à la cigarette.

14. Procédé selon la revendication 13, dans lequel l'étape de traitement exécutée par l'unité d'auto-apprentissage (19) inclut une seconde étape complémentaire de : sélection de l'algorithme utilisé pour la détermination de la position (33) à laquelle le bord du papier de manchette (9) est assemblé à la cigarette filtre (11) ; calcul des niveaux de gris du papier de manchette (9) ; calcul de la zone de recherche dans laquelle positionner l'extrémité (32) de la cigarette (7) ; calcul de la longueur de la partie (7a) de la cigarette filtre (11) exposée au-delà du bord du papier de manchette (9) ; calcul de la longueur du papier-filtre (9).

15. Procédé selon la revendication 14, dans lequel l'étape de traitement exécutée par l'unité d'auto-apprentissage (19) inclut une troisième étape complémentaire de calcul d'éléments d'information pouvant être modifiés par l'opérateur par le biais de l'interface opérateur (23), consistant en des valeurs d'acceptation pour un ou plusieurs des paramètres (P2) relatifs aux propriétés physiques des produits du tabac.

16. Procédé selon l'une quelconque des revendications de 13 à 15, dans lequel les paramètres prédéterminés (P1) concernent : la longueur de la partie de la cigarette filtre (11) couverte par le papier de manchette (9) ; la longueur de la partie (7a) de la cigarette filtre (11) située à l'extérieur du papier de manchette (9) ; les deux positions limites du lettrage (S) imprimé sur la partie (7a) de la cigarette filtre (11) située à l'extérieur du papier de manchette (9).

17. Procédé selon les revendications 8 ou 9, dans lequel l'étape de traitement exécutée par l'unité d'auto-apprentissage (19) inclut une première étape complémentaire de détermination d'une fourchette d'acceptation pour au moins : le diamètre du boudin continu (43) ou le niveau de gris de la bande de papier d'emballage (44) utilisée pour enrouler le boudin continu (43).

18. Procédé selon la revendication 17, dans lequel l'étape de traitement exécutée par l'unité d'auto-apprentissage (19) inclut une seconde étape complémentaire de calcul des niveaux de gris de la bande de papier d'emballage (44) utilisée pour enrouler le boudin continu (43).

19. Procédé selon la revendication 18, dans lequel l'étape de traitement exécutée par l'unité d'auto-apprentissage (19) inclut une troisième étape complémentaire de calcul des éléments d'information pouvant être modifiés par l'opérateur par le biais de l'interface opérateur (23), consistant en des valeurs d'acceptation pour un ou plusieurs des paramètres (P2) relatifs aux propriétés physiques des produits du tabac.

20. Procédé selon l'une quelconque des revendications de 17 à 19, dans lequel les paramètres prédéterminés (P1) concernent : l'espacement selon lequel les éléments du lettrage (S) sont imprimés les uns à côté des autres sur le boudin continu (43) ; la couleur du lettrage (S).

21. Procédé selon la revendication 10, dans lequel l'étape de traitement exécutée par l'unité d'auto-apprentissage (19) inclut une première étape complémentaire de détermination d'une fourchette d'acceptation pour au moins l'un des différents éléments d'information suivants : la position le long de l'axe longitudinal du filtre composite (34) des points de contact entre chacun des bouchons filtres (35, 36, 37) ; le diamètre des bouchons filtres (35, 36, 37) ; le niveau de gris de chacun des bouchons filtres (35, 36, 37).

22. Procédé selon la revendication 21, dans lequel l'étape de traitement exécutée par l'unité d'auto-apprentissage (19) inclut une seconde étape complémentaire de : calcul des positions auxquelles positionner les deux extrémités du filtre composite (34) ; calcul des longueurs de chacun des bouchons filtres (35, 36, 37) ; calcul du niveau de gris de chacun des bouchons filtres (35, 36, 37).

23. Procédé selon la revendication 22, dans lequel l'étape de traitement exécutée par l'unité d'auto-apprentissage (19) inclut une troisième étape complémentaire de calcul des éléments d'information pouvant être
modifiés par l'opérateur par le biais de l'interface opérateur (23), consistant en des valeurs d'acceptation pour un ou plusieurs des paramètres (P2) relatifs aux propriétés physiques des produits du tabac.

24. Procédé selon les revendications 21 à 23, dans lequel les paramètres prédéterminés (P1) concernent :
la longueur de chacun des bouchons filtres (35, 36, 37) composant le filtre composite (34) ; le type de bouchon filtre.
